Europäisches Patentamt

European Patent Office

Office européen des brevets

(19)

(11) Veröffentlichungsnummer: **0 044 579**
**B1**

(12) **EUROPÄISCHE PATENTSCHRIFT**

(45) Veröffentlichungstag der Patentschrift:
13.02.85

(21) Anmeldenummer: 81200630.2

(22) Anmeldetag: 09.06.81

(51) Int. Cl.⁴: **B 60 G 21/04**, B 60 G 13/00

(54) **Radaufhängung für Kraftfahrzeuge.**

(30) Priorität: 22.07.80 DE 3027694

(43) Veröffentlichungstag der Anmeldung:
27.01.82 Patentblatt 82/4

(45) Bekanntmachung des Hinweises auf die Patenterteilung:
13.02.85 Patentblatt 85/7

(84) Benannte Vertragsstaaten:
**FR GB IT**

(56) Entgegenhaltungen:
**DE - A - 1 580 480**
**DE - A - 2 116 981**
**DE - A - 2 460 178**
**DE - A - 2 932 699**
**DE - B - 1 244 593**
**FR - A - 2 097 496**
**US - A - 2 254 325**
**US - A - 2 961 253**
**US - A - 4 143 887**
**US - A - 4 153 272**

(73) Patentinhaber: **Dr.Ing.h.c. F. Porsche Aktiengesellschaft, Porschestrasse 42, D-7000 Stuttgart 40 (DE)**

(72) Erfinder: **Armbrust, Eberhard, Ing. grad., Kronenstrasse 5, D-7252 Renningen (DE)**
Erfinder: **Stotz, Erich, Ing. grad., Thüringer Weg 15, D-7053 Kernen (DE)**

## Beschreibung

Die Erfindung bezieht sich auf eine Radaufhängung für Kraftfahrzeuge nach dem Oberbegriff des Anspruchs 1.

Bei einer bekannten Radaufhängung (DE-OS 1 580 480) der eingangs genannten Gattung ist eine Druckfeder vorgesehen, die einem durch eine Radlast auf das Federbein ausgeübten Biegemoment entgegenwirkt. Diese Druckfeder ist zwischen einem Querlenker der Radaufhängung und einem Zylinder des Federbeins angeordnet und bewirkt ein Rückstellmoment, das nicht über den ganzen Federweg dem Biegemoment aus der Radlast entspricht. Hierdurch erfolgt beim Einfedervorgang ein Verklemmen im Federbein und die Folge davon ist ein ungenügendes Ansprechen, was den Fahrkomfort wesentlich verschlechtert. Außerdem sind bei einer Radaufhängung mit einem Stabilisator zusätzlich zu diesem noch eine Druckfeder sowie entsprechende Aufhängevorrichtungen erforderlich. Ferner ist aus der FR-PS 2 097 496 eine Radaufhängung mit Stabilisator bekannt, bei der die in Fahrzeuglängsrichtung verlaufenden Schenkel des Stabilisators in einer Aufnahme für das untere Ende des Federbeins gehalten sind.

Aufgabe der Erfindung ist es, ein durch Biegemomente hervorgerufenes Verklemmen des Federbeines über seinen ganzen Federweg zu verhindern, wobei diese Maßnahme ohne wesentliche Konstruktionsänderung der Radaufhängung unter Verwendung von Teilen der Radaufhängung erfolgen soll.

Diese Aufgabe wird nach der Erfindung durch die Merkmale des Anspruchs 1 gelöst. Weitere Merkmale beinhalten die Unteransprüche.

Die mit der Erfindung erzielten Vorteile bestehen im wesentlichen darin, daß ein Verklemmen des Federbeines über den ganzen Federweg vermieden wird, wobei der Stabilisator seine eigentliche Funktion als Federungselement der Radaufhängung beibehält. Hierdurch entfallen zusätzlichen Raum beanspruchende Vorrichtungen an der Radaufhängung und der schon vorhandene Stabilisator kann ohne nennenswerte konstruktive Änderungen am Federbein einfach und sicher befestigt werden.

In der Zeichnung ist ein Ausführungsbeispiel der Erfindung näher erläutert. Es zeigt

Fig. 1 eine schaubildliche Darstellung einer Radaufhängung mit einem Federbein und einem Stabilisator,

Fig. 2 eine Ansicht auf eine Haltevorrichtung des Stabilisators am Zylinder des Federbeines in Pfeilrichtung Z der Fig. 1 gesehen, und

Fig. 3 einen Schnitt nach der Linie III-III der Fig. 2 durch die Haltevorrichtung.

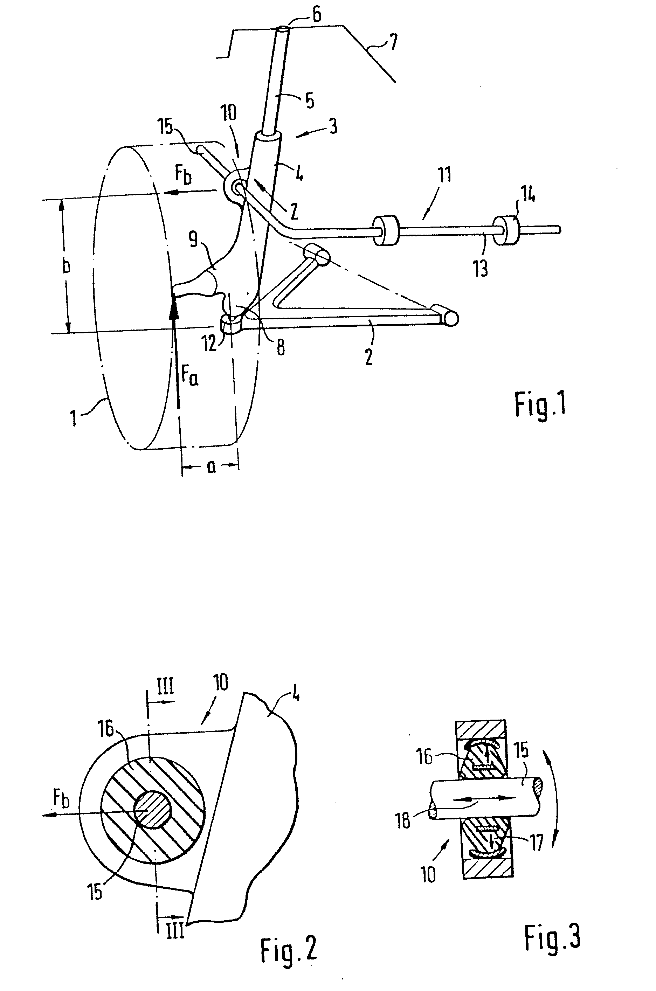

Fig. 1 zeigt eine McPherson-Achse, bei der ein Rad 1 an einem im wesentlichen horizontal verlaufenden Querlenker 2 und einem Federbein 3 aufgehängt ist. Das Federbein 3 umfaßt einen Zylinder 4, einen Kolben (nicht gezeigt) und eine Kolbenstange 5. Die Kolbenstange 5 ist mit ihrem freien Ende 6 am Fahrzeugaufbau 7 gelagert und mittels eines Lagers 12 ist der Zylinder 4 mit einem unteren Ende 8 gelenkig mit dem Querlenker 2 verbunden. Der Zylinder 4 trägt einen Radzapfen 9 und ist mit einer Haltevorrichtung 10 zur Aufnahme eines Stabilisators 11 versehen.

Der Stabilisator 11 ist vorzugsweise U-förmig ausgebildet und mit seinem Steg 13 über Lager 14 schwenkbar mit dem Fahrzeugaufbau verbunden, wobei die Lager derart ausgebildet sind, daß eine Querverschiebung des Stabilisators 11 unterbunden wird. Seine abgewinkelten Schenkel 15 sind in der Haltevorrichtung 10 gelagert. Diese Schenkel greifen in der Weise an die Zylinder 4 der Federbeine 3 an, daß sie einem durch die Radlast $F_a$ auf den Zylinder 4 ausgeübten Biegemoment $M_a$ entgegenwirken. Diese Wirkung auf die Federbeine 4 jeder Radseite wird durch eine Vorspannung der Stabilisatorschenkel 15 erzielt. Diese Vorspannung mit einer Kraft $F_b$ wirkt in Pfeilrichtung zur Fahrzeugaußenseite, wodurch dem durch die Radlast $F_a$ auf das Federbein 3 wirkenden Biegemoment

$$M_a = F_a \times a$$

ein durch den Stabilisator 11 aufgebrachtes Rückstellmoment

$$M_b = F_b \times b$$

entgegengesetzt wird. Bei richtiger Auslegung des Stabilisators 11 und seiner Anordnung auf die Kraft $F_b$, die durch den Stabilisator 11 entsteht, proportional der Radlast $F_a$, so daß

$$F_b = \frac{a}{b} \times F_a$$

ist. Damit entspricht das Rückstellmoment Mb über den gesamten Federweg des Federbeines 3 der Größe des Biegemomentes Ma.

Wie aus den Fig. 2 und 3 ersichtlich ist, umfaßt die Haltevorrichtung 10 einen elastischen Lagerring 16 aus Gummi, der eine kardanische Bewegung des Stabilisators sowie eine Bewegung der Arme 15 des Stabilisators 11 in Fahrzeuglängsrichtung 18 zuläßt. Der Lagerring 16 ist hierzu in radialer Richtung 17 in der Weise unnachgiebig ausgeführt, daß noch Auslenkbewegungen möglich sind. In Fahrzeuglängsrichtung 18 ist der Lagerring elastisch nachgiebig ausgebildet, so daß eine Verschiebung der Schenkel 15 des Stabilisators 11 in Fahrzeuglängsrichtung 18 in Grenzen möglich ist.

Bei einem Federungsvorgang ist das vom Stabilisator 11 auf die Federbeine 3 wirkende Rückstellmoment Mb derart ausgelegt, daß ein Verklemmen des Federbeines 3 unterbunden wird. Eine Veränderung des Rückstellmomentes Mb wird durch eine entsprechende Höhenanordnung der Stabilisatorarme 11 zum Verbindungspunkt der Zylinder 4 auf dem Querlenker 2 erzielt. Die Haltevorrichtung 10 kann hirzu nach einer nicht dargestellten Ausführungsform mit einer Einrichtung versehen sein, die eine Verstellung der Arme 15 in der Höhe ermöglicht, wodurch das Rückstellmoment Mb dann entsprechend den Gegebenheiten ausgelegt wird.

**Patentansprüche**

1. Radaufhängung für Kraftfahrzeuge mit einem unteren, über ein Federbein (3) am Fahrzeugaufbau (7) abgestützten Querlenker (2), wobei am Federbein (3) ein Mittel vorgesehen ist, das einem durch eine Radlast ($F_a$) aus das Federbein (3) ausgeübten Biegemoment ($M_a$) entgegenwirkt, dadurch gekennzeichnet, daß das Mittel als U-förmiger Stabilisator (11) ausgebildet ist, der mit einem querverlaufenden Steg (13) über Lager (14) am Aufbau (7) gehalten ist und seine in Fahrzeuglängsrichtung abgewinkelten Schenkel (15) über eine Haltevorrichtung (10) mit Zylindern (4) der Federbeine (3) jeder Radseite verbunden sind und eine zusätzliche zur Radaußenseite hin gerichtete Vorbiegung mit der Kraft ($F_b$) aufweisen, die unabhängig von der Verdrehungskraft des Stabilisators (11) ist.

2. Radaufhängung nach Anspruch 1, dadurch gekennzeichnet, daß das von der Vorbiegung der Schenkel (15) aufgebrachte Rückstellmoment ($M_b$) dem Biegemoment ($F_a$) über den gesamten Einfederungsweg des Rades entspricht.

3. Radaufhängung nach den Ansprüchen 1 oder 2, dadurch gekennzeichnet, daß die Haltevorrichtung (10) einen elastischen Lagerring (16) umfaßt, der eine kardanische Bewegung des Stabilisators (11) sowie eine Bewegung des Stabilisators (11) in Fahrzeuglängsrichtung (18) zuläßt.

4. Radaufhängung nach Anspruch 3, dadurch gekennzeichnet, daß der Lagerring (16) aus Gummi besteht und in radialer Richtung (17) weniger elastisch ist als in Fahrzeuglängsrichtung (18).

**Claims**

1. A wheel suspension for motor vehicles with a lower transverse link (2) supported by way of a shock-absorbing leg (3) on the vehicle body (7), there being provided on the shock-absorbing leg (3) a means which counteracts a bending moment ($M_a$) exerted by a wheel load ($F_a$) form the shock-absorbing leg (3), characterized in that the means is in the form of a U-shaped stabilizer (11) which is held on the body (7) by a transversely extending cross-member (13) by way of bearings (14), and its arms which are angled in the longitudinal direction of the vehicle are connected to cylinders (4) of the shock-absorbing legs (3) on each side of the wheel by way of a holding apparatus (10) and have an additional bending forward which is directed towards the outside of the wheel with the force ($F_b$) which is independent of the torsional force of the stabilizer (11).

2. A wheel suspension according to Claim 1, characterized in that the restoring moment ($M_b$) exerted by the bending forward of the arms (15) corresponds to the bending moment ($F_a$) over the entire path of stroke of the wheel.

3. A wheel suspension according to Claim 1 or 2, characterized in that the holding apparatus (10) embraces a resilient bearing ring (16) which permits a cardan movement of the stabilizer (11) and a movement of the stabilizer (11) in the longitudinal direction (18) of the vehicle.

4. A wheel suspension according to Claim 3, characterized in that the bearing ring (16) consists of rubber and is less resilient in the radial direction (17) than in the longitudinal direction (18) of the vehicle.

**Revendications**

1. Suspension pour voitures automobiles, avec un levier oscillant transversal (2) prenant appui sur la carrosserie (7) de la voiture par l'intermédiaire d'une jambe de force à resort (3), des dispositions étant prévues sur ladite jambe de force à ressort (3) pour contrebalancer le moment de flexion ($M_a$) agissant sur la jambe de force à ressort (3) et engendré par une force ($F_a$) correspondant à la charge de la roue, caractérisée par le fait que lesdites dispositions consistent en une barre anti-roulis (11) en forme de U, dont la branche transversale (13) est fixée à la carosserie (7) au moyen des paliers de logement (14) et dont les extrémités (15) repliées dans le sens longitudinal du véhicule sont réunies, des deux côtés de la voiture, au moyen d'un système de maintien (10), au cylindre (4) de la jambe de force (3) correspondante et exercent du fait de leur précontrainte à la flexion une poussée complémentaire de force ($F_b$) orientée vers l'extérieur, qui est indépendante du moment de torsion appliqué à la barre anti-roulis (11).

2. Suspension selon la revendication 1, caractérisée par le fait que le moment de rappel ($M_b$) résultant de la précontrainte de flexion de l'extrémité (15) correspond au moment de flexion ($F_a$) sur toute l'étendue du débattement de la roue.

3. Suspension selon l'une quelconque des revendications 1 ou 2, caractérisée par le fait que le système de maintien (10) comprend une bague de logement élastique (16) qui se comporte comme une liaison à la cardan et autorise également un déplacement de la barre anti-roulis (11) dans le sens longitudinal (11) de la voiture.

4. Suspension selon la revendication 3, caractérisée par le fait que la bague de logement (16) est en caoutchouc et que son élasticité est moins grande dans le sens radial (17) que dans le sens de la longueur du véhicule (18).

Fig.1

Fig.2

Fig.3